# EUROPEAN PATENT APPLICATION

(11) **EP 3 296 943 A1**
(43) Date of publication of application: **21.03.2018**
(21) Application number: 16792117.0
(22) Date of filing: 05.05.2016
(51) Int. Cl.: G06Q 30/02, G06Q 20/40

(54) **METHOD OF PROCESSING EXCHANGED DATA AND DEVICE UTILIZING SAME**

(30) Priority: 13.05.2015 CN 201510244028
(71) Applicant: Alibaba Group Holding Limited, Grand Cayman (KY)
(72) Inventor: FU, Yang, Hangzhou 310099 (CN)
(74) Representative: Conroy, John
(86) International application number: PCT/CN2016/081089
(87) International publication number: WO 2016/180267

(57) **Abstract**

The present application discloses an interaction data processing method and apparatus, wherein the method includes: receiving service interaction data initiated by a user; substituting user behavior data corresponding to the service interaction data in at least one preset dimension into a risk model corresponding to the user; and judging whether the user behavior data in the preset dimension is in a safety threshold range defined by the risk model; if yes, approving the service interaction data; and if no, rejecting the service interaction data. In the present application, a risk model of service interaction data is built via a historical behavior of a user before initiation of the service interaction data, and safety of the current service interaction data is judged via the risk model, thereby reducing the degree of bothering the user and improving network communication efficiency.

## Description

The present application claims priority to Chinese Patent Application No. 201510244028.4 filed on May 13, 2015 and entitled "INTERACTION DATA PROCESSING METHOD AND APPARATUS", which is incorporated herein by reference in its entirety.

### Technical Field

The present application relates to the field of computer, and in particular, to an interaction data processing method and apparatus.

### Background Art

In order to avoid a situation where another person pretends to be a user to conduct data interaction (especially data involving funds, transaction, etc.) on the Internet, the existing approach is to judge the safety of currently initiated interaction data through collecting device information of a user terminal device, and/or information of an environment where the user is located (e.g., a geographic location, an IP address, and so on), for example, to judge whether the interaction data is initiated by the user himself/herself.

However, once the user replaces the terminal device or changes the environment, or the device information and environment information of the user terminal device are not collected, the existing technology will not be able to judge the safety of the currently initiated interaction data, and can only issue identity validation information to the user, which will seriously bother the user.

### Summary of the Invention

The objectives of the present application are to provide an interaction data processing method and apparatus for enhancing the safety of interaction data and reducing the degree of bothering the user.

In order to achieve one of the above objectives of the present application, an embodiment of the present application provides an interaction data processing method, which includes:
receiving service interaction data initiated by a user;
substituting user behavior data corresponding to the service interaction data in at least one preset dimension into a risk model corresponding to the user, wherein the preset dimension is associated with an interaction behavior between the user and a third party involved in the service interaction data; and
judging whether the user behavior data in the preset dimension is in a safety threshold range defined by the risk model; if yes, approving the service interaction data; and if no, rejecting the service interaction data.

As a further improvement to an embodiment of the present application, the method further includes building the risk model, which specifically includes:
acquiring a value of a user historical behavior of the user corresponding to each piece of historical service interaction data in the at least one preset dimension within a first time interval;
calculating a first mean value or a first variance of the user historical behaviors corresponding to all pieces of historical service interaction data in the preset dimension within the first time interval;
acquiring a value of the user historical behavior of the user corresponding to each piece of historical service interaction data in the at least one preset dimension within a second time interval;
calculating a second mean value or a second variance of the user historical behaviors corresponding to all pieces of historical service interaction data in the preset dimension within the second time interval; and
calculating a safety threshold range corresponding to each preset dimension by using a decision tree through the first mean value or the first variance and the second mean value or the second variance or through a difference between the first mean value and the second mean value, and building the risk model corresponding to the user, wherein the length of the first time interval is greater than that of the second time interval.

As a further improvement to an embodiment of the present application, the substituting a value of a user behavior corresponding to the service interaction data in at least one preset dimension into a risk model specifically includes:
judging whether the user behavior data corresponding to the service interaction data in the preset dimension exists; and
if yes, substituting the value of the user behavior corresponding to the service interaction data in at least one preset dimension into the risk model.

As a further improvement to an embodiment of the present application, the preset dimension is associated with an instant message interaction behavior between the user and the third party involved in the service interaction data.

As a further improvement to an embodiment of the present application, the preset user behavior includes:
a communication duration of instant message interaction between the user and the third party involved in the service interaction data, a data size of the instant message interaction between the user and the third party involved in the service interaction data, and an interval time from completion of the instant message interaction between the user and the third party involved in the service interaction data to initiation of the service interaction data.

As a further improvement to an embodiment of the present application, the judging whether the user behavior data in the preset dimension is in a safety threshold range defined by the risk model specifically includes:
judging whether the communication duration of the instant message interaction between the user and the third party involved in the service interaction data, the data size of the instant message interaction between the user and the third party involved in the service interaction data, and the interval time from completion of the instant message interaction between the user and the third party involved in the service interaction data to initiation of the service interaction data all fall within the corresponding safety threshold range.

In order to achieve one of the objectives of the above application, an embodiment of the present application provides an interaction data processing apparatus, which includes:
an interaction module configured to receive service interaction data initiated by a user;
a processing module configured to substitute user behavior data corresponding to the service interaction data in at least one preset dimension into a risk model corresponding to the user, wherein the preset dimension is associated with an interaction behavior between the user and a third party involved in the service interaction data; and
judge whether the user behavior data in the preset dimension is in a safety threshold range defined by the risk model; if yes, approve the service interaction data; and if no, reject the service interaction data.

As a further improvement to an embodiment of the present application, the apparatus further includes a model building module configured to:
acquire a value of a user historical behavior of the user corresponding to each piece of historical service interaction data in the at least one preset dimension within a first time interval;
calculate a first mean value or a first variance of the user historical behaviors corresponding to all pieces of historical service interaction data in the preset dimension within the first time interval;
acquire a value of the user historical behavior of the user corresponding to each piece of historical service interaction data in the at least one preset dimension within a second time interval;
calculate a second mean value or a second variance of the user historical behaviors corresponding to all pieces of historical service interaction data in the preset dimension within the second time interval;
calculate a safety threshold range corresponding to each preset dimension by using a decision tree through the first mean value or the first variance and the second mean value or the second variance or through a difference between the first mean value and the second mean value, and build the risk model corresponding to the user, wherein the length of the first time interval is greater than that of the second time interval.

As a further improvement to an embodiment of the present application, the apparatus further includes an adapter module configured to:
judge whether the user behavior data corresponding to the service interaction data in the preset dimension exists.

As a further improvement to an embodiment of the present application, the preset dimension is associated with an instant message interaction behavior between the user and the third party involved in the service interaction data.

As a further improvement to an embodiment of the present application, the preset user behavior includes:
a communication duration of instant message interaction between the user and the third party involved in the service interaction data, a data size of the instant message interaction between the user and the third party involved in the service interaction data, and an interval time from completion of the instant message interaction between the user and the third party involved in the service interaction data to initiation of the service interaction data.

As a further improvement to an embodiment of the present application, the processing module is specifically configured to:
judge whether the communication duration of the instant message interaction between the user and the third party involved in the service interaction data, the data size of the instant message interaction between the user and the third party involved in the service interaction data, and the interval time from completion of the instant message interaction between the user and the third party involved in the service interaction data to initiation of the service interaction data all fall within the corresponding safety threshold range.

As compared with the prior art, the technical effect of the present application lies in: building a risk model of service interaction data via a historical behavior of a user before initiation of the service interaction data, to judge safety of the current service interaction data via the risk model, thereby reducing the degree of bothering the user and improving network communication efficiency.

### Brief Description of the Drawings

FIG. 1 is a flowchart of an interaction data processing method according to an embodiment of the present application;
FIG. 2 is a flowchart of building a risk model according to an embodiment of the present application; and
FIG. 3 is a module diagram of an interaction data processing apparatus according to an embodiment of the present application.

### Detailed Description

The present application will be described below in detail with reference to the detailed embodiments shown in the drawings. However, these embodiments do not limit the present application, and changes in structures, methods, or functions made by those of ordinary skill in the art according to these embodiments are all covered in the protection scope of the present application.

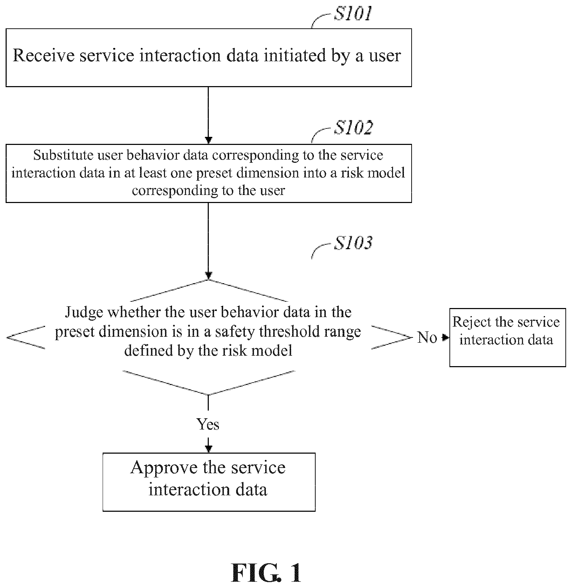

As shown in FIG. 1, in an embodiment of the present application, the interaction data processing method includes:
S101. Service interaction data initiated by a user is received.
S102. User behavior data corresponding to the service interaction data in at least one preset dimension is substituted into a risk model corresponding to the user.
S103. It is judged whether the user behavior data in the preset dimension is in a safety threshold range defined by the risk model; if yes, the service interaction data is approved; and if no, the service interaction data is rejected.

In this embodiment, the service interaction data of a network transaction service is taken as an example for describing the technical solution of the present application in detail. Of course, the service interaction data may be not limited to the service interaction data of a network transaction service, and persons skilled in the art may apply the technical solution of the present application to other services through a common technical means. Details are not described herein again.

When the service interaction data of the network transaction service is taken as an example, a real-time transaction initiated by a user may generate the service transaction data, and after the service transaction data is generated, a transaction system/server may receive the service transaction data. At this time, in order to avoid the situation where another person pretends to be the user to initiate a real-time transaction, and ensure the capital safety of the user, it is necessary to evaluate the service transaction data in the transaction system/server to judge whether it is safe.

In this embodiment, whether the service transaction data is safe is judged through a risk model corresponding to the user (for example, a risk model corresponding to the user is determined through an ID thereof), as well as user behavior data corresponding to the service transaction data in a preset dimension. The preset dimension is associated with an interaction behavior between the user and a third party involved in the service interaction data.

In addition, in this embodiment, in order to decrease the computational burden of the transaction system/server, the risk model may be a risk model updated for the user historical behavior corresponding to the historical service interaction data within 24 hours before the initiation time of the current network transaction service in the preset dimension.

Further, the step of substituting a value of a user behavior corresponding to the service interaction data in at least one preset dimension into a risk model specifically includes:
judging whether the user behavior data corresponding to the service interaction data in the preset dimension exists; and
if yes, substituting the value of the user behavior corresponding to the service interaction data in at least one preset dimension into the risk model.

In some cases, the service interaction data does not contain the corresponding user behavior in the preset dimension. For example, a user A does not have an interaction behavior with a third party involved in the service interaction data when performing the present network transaction service. As can be understood, in this case, it is impossible to judge the safety of the present service interaction data by substituting the user behavior data in the preset dimension into the risk model. At this time, the safety of the present service interaction data can be judged through a relatively conventional technical solution. For example, device information of a user terminal device and/or information of an environment where the user is located (for example, a geographical position, an IP address, and so on) are/is collected to judge the safety of the currently initiated interaction data.

Moreover, when the present service interaction data contains the corresponding user behavior data in the preset dimension, the safety of the present service interaction data may be judged by substituting the user behavior data in the preset dimension into the risk model.

Of course, in another case where, for example, there are less network transaction services of the user A, or the service interaction data of the network transaction service of the user A contains less corresponding user behaviors in a preset dimension, which is insufficient to form a risk model corresponding to the user A, i.e., the risk model corresponding to the user A is not built in the transaction system/server. As can be understood, in this case, the safety of the present service interaction data cannot be judged by substituting the user behavior data in the preset dimension into the risk model. At this time, the safety of the present service interaction data can be judged through a relatively conventional technical solution. For example, device information of a user terminal device and/or information of an environment where the user is located (for example, a geographical position, an IP address, and so on) are/is collected to judge the safety of the currently initiated interaction data.

Further, in this embodiment, the preset dimension is associated with an instant message interaction behavior between the user and a third party involved in the service interaction data.

The user behavior data in the preset dimension includes: a communication duration of instant message interaction between the user and the third party involved in the service interaction data, a data size of the instant message interaction between the user and the third party involved in the service interaction data, and an interval time from completion of the instant message interaction between the user and the third party involved in the service interaction data to initiation of the service interaction data.

Upon analysis on big data, the user, during the network transaction, is accustomed to communicating with a seller (the third party) about details of commodities, whether to have desired styles, and whether to provide free delivery. Different users have their respective behavior habits in terms of a duration of the communication with the seller, a data size of records of the communication with the seller, and an interval time from completion of the communication with the seller to initiation of payment. Whether the current user is the user himself/herself and whether the current service interaction data is safe can be identified by means of these behavior habits of the user, such that a preferred protective effect on the safety of buyer's payment during the user's shopping is achieved.

Further, in this embodiment, the step of judging whether the user behavior data in the preset dimension is in a safety threshold range defined by the risk model specifically includes: judging whether the communication duration of the instant message interaction between the user and the third party involved in the service interaction data, the data size of the instant message interaction between the user and the third party involved in the service interaction data, and the interval time from completion of the instant message interaction between the user and the third party involved in the service interaction data to initiation of the service interaction data all fall within the corresponding safety threshold range; i.e., only when the three dimensions all fall within the corresponding safety threshold range, it indicates that the service interaction data is safe.

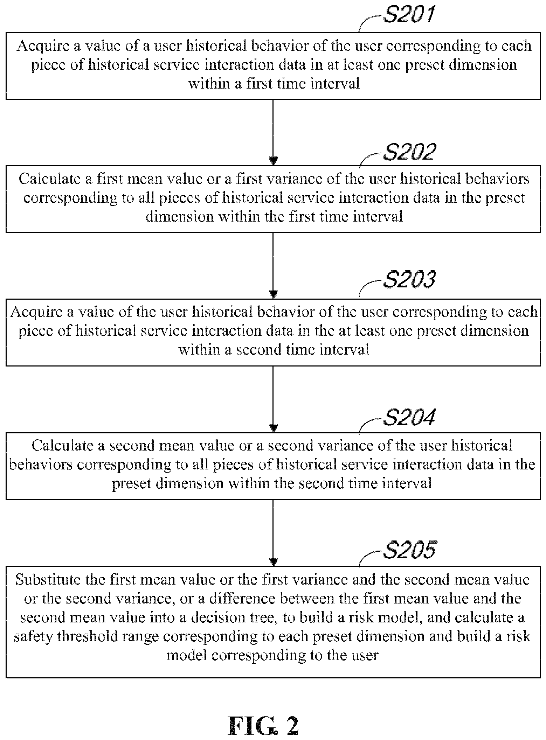

As shown in FIG. 2, in an embodiment of the present application, the method further includes building a risk model, which specifically includes:
S201. A value of a user historical behavior of the user corresponding to each piece of historical service interaction data in the at least one preset dimension within a first time interval is acquired.
S202. A first mean value or a first variance of the user historical behaviors corresponding to all pieces of historical service interaction data in the preset dimension within the first time interval is calculated.
S203. A value of the user historical behavior of the user corresponding to each piece of historical service interaction data in the at least one preset dimension within a second time interval is acquired.
S204. A second mean value or a second variance of the user historical behaviors corresponding to all pieces of historical service interaction data in the preset dimension within the second time interval is calculated;
S205. A safety threshold range corresponding to each preset dimension is calculated by using a decision tree through the first mean value or the first variance and the second mean value or the second variance or through a difference between the first mean value and the second mean value, and the risk model corresponding to the user is built, wherein the length of the first time interval is greater than that of the second time interval.

Hereinafter, one specific example is illustrated as an example:
First, a user ID is taken as a primary key to acquire records of chatting between the user and sellers before transactions on all or specified platforms within one year, which include: durations of the communication between the user and the sellers, data sizes of records of the communication with the sellers, and interval times from completion of the communication with the sellers to initiation of payment.

Next, users whose network transaction services satisfy a certain condition (for example, the number of the network transaction services is greater than or equal to a preset number) in the past are selected. Then, for each of the selected users, the durations of the communication with the sellers, the data sizes of records of the communication with the sellers, and the interval times from completion of the communication with the sellers to initiation of payment are aggregated respectively.

In this way, for each of the selected users, a mean value or variance of the durations of the communication with the sellers, a mean value or variance of the data sizes of records of the communication with the sellers, and a mean value or variance of the interval times from completion of the communication with the sellers to initiation of payment may be obtained. That is, the historical behavior data of the communication between the user and the sellers before the initiation of the service interaction data (before the transaction payment) can be obtained.

Afterwards, new records of chatting with sellers within a duration (such as one month) before transaction are selected as a sample, to obtain, according to the above manner, a mean value or variance of durations of the communication with the sellers, a mean value or variance of data sizes of records of the communication with the sellers, and a mean value or variance of the interval times from completion of the communication with the sellers to initiation of payment of each of the selected users. That is, sample behavior data can be obtained. Of course, the sample behavior data can also be calculated before or at the same time as the historical behavior data is being calculated.

In this way, the risk model may be built by means of a decision tree according to the above historical behavior data and sample behavior data. Definitely, an absolute value of a deviation between the sample behavior data and corresponding data in the above historical behavior data may be calculated first, then the risk model is built by means of the decision tree according to the absolute value. The risk model may define a safety threshold range corresponding to each preset dimension (a duration of communication between the user and a seller, a data size of records of the communication with the seller, and an interval time from completion of the communication with the seller to initiation of payment).

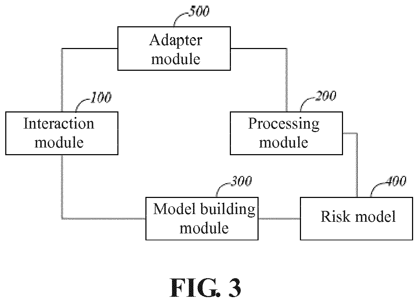

As shown in FIG. 3, in an embodiment of the present application, the interaction data processing apparatus includes:
an interaction module 100 configured to receive service interaction data initiated by a user;
a processing module 200 configured to substitute user behavior data corresponding to the service interaction data in at least one preset dimension into a risk model 400 corresponding to the user; and
judge whether the user behavior data in the preset dimension is in a safety threshold range defined by the risk model 400; if yes, approve the service interaction data; and if no, reject the service interaction data.

In this embodiment, the service interaction data of a network transaction service is taken as an example for describing the technical solution of the present application in detail. Of course, the service interaction data may be not limited to the service interaction data of a network transaction service, and persons skilled in the art may apply the technical solution of the present application to other services through a common technical means. Details are not described herein again.

When the service interaction data of the network transaction service is taken as an example, a real-time transaction initiated by a user may generate the service transaction data, and after the service transaction data is generated, a transaction system/server may receive the service transaction data. At this time, in order to avoid the situation where another person pretends to be the user to initiate a real-time transaction, and ensure the capital safety of the user, it is necessary to evaluate the service transaction data in the transaction system/server to judge whether it is safe.

In this embodiment, whether the service transaction data is safe is judged through the risk model 400 corresponding to the user (for example, the risk model 400 corresponding to the user is determined through an ID thereof), as well as user behavior data corresponding to the service transaction data in a preset dimension. The preset dimension is associated with an interaction behavior between the user and a third party involved in the service interaction data.

In addition, in this embodiment, in order to decrease the computational burden of the transaction system/server, the risk model 400 may be a risk model updated for the user historical behavior corresponding to the historical service interaction data within 24 hours before the initiation time of the current network transaction service in the preset dimension.

Further, the apparatus further includes an adapter module 500 configured to judge whether the user behavior data corresponding to the service interaction data in the preset dimension exists;
if yes, a value of a user behavior corresponding to the service interaction data in at least one preset dimension is substituted into the risk model 400 by the processing module 200.

In some cases, the service interaction data does not contain the corresponding user behavior in the preset dimension. For example, a user A does not have an interaction behavior with a third party involved in the service interaction data when performing the present network transaction service. As can be understood, in this case, it is impossible to judge the safety of the present service interaction data by substituting the user behavior data in the preset dimension into the risk model 400. At this time, the safety of the present service interaction data can be judged through a relatively conventional technical solution. For example, device information of a user terminal device and/or information of an environment where the user is located (for example, a geographical position, an IP address, and so on) are/is collected to judge the safety of the currently initiated interaction data.

Moreover, when the present service interaction data contains the corresponding user behavior data in the preset dimension, the safety of the present service interaction data can be judged by substituting the user behavior data in the preset dimension into the risk model 400.

Of course, in another case where, for example, there are less network transaction services of the user A, or the service interaction data of the network transaction service of the user A contains less corresponding user behaviors in a preset dimension, which is insufficient to form a risk model corresponding to the user A, i.e., the risk model corresponding to the user A is not built in the transaction system/server. As can be understood, in this case, the safety of the present service interaction data cannot be judged by substituting the user behavior data in the preset dimension into the risk model. At this time, the safety of the present service interaction data can be judged through a relatively conventional technical solution. For example, device information of a user terminal device and/or information of an environment where the user is located (for example, a geographical position, an IP address, and so on) are/is collected to judge the safety of the currently initiated interaction data.

Further, in this embodiment, the preset dimension is associated with an instant message interaction behavior between the user and a third party involved in the service interaction data.

The user behavior data in the preset dimension includes: a communication duration of instant message interaction between the user and the third party involved in the service interaction data, a data size of the instant message interaction between the user and the third party involved in the service interaction data, and an interval time from completion of the instant message interaction between the user and the third party involved in the service interaction data to initiation of the service interaction data.

Upon analysis on big data, the user, during the network transaction, is accustomed to communicating with a seller (the third party) about details of commodities, whether to have desired styles, and whether to provide free delivery. Different users have their respective behavior habits in terms of a duration of the communication with the seller, a data size of records of the communication with the seller, and an interval time from completion of the communication with the seller to initiation of payment. Whether the current user is the user himself/herself and whether the current service interaction data is safe can be identified by means of these behavior habits of the user, such that a preferred protective effect on the safety of buyer's payment during the user's shopping is achieved.

Further, in this embodiment, the processing module 200 is specifically configured to: judge whether the communication duration of the instant message interaction between the user and the third party involved in the service interaction data, the data size of the instant message interaction between the user and the third party involved in the service interaction data, and the interval time from completion of the instant message interaction between the user and the third party involved in the service interaction data to initiation of the service interaction data all fall within the corresponding safety threshold range; i.e., only when the three dimensions all fall within the corresponding safety threshold range, it indicates that the service interaction data is safe.

As shown in FIG. 3, in an embodiment of the present application, the apparatus further includes a model building module 300 configured to:
acquire a value of a user historical behavior of the user corresponding to each piece of historical service interaction data in the at least one preset dimension within a first time interval;
calculate a first mean value or a first variance of the user historical behaviors corresponding to all pieces of historical service interaction data in the preset dimension within the first time interval;
acquire a value of the user historical behavior of the user corresponding to each piece of historical service interaction data in the at least one preset dimension within a second time interval;
calculate a second mean value or a second variance of the user historical behaviors corresponding to all pieces of historical service interaction data in the preset dimension within the second time interval;
calculate a safety threshold range corresponding to each preset dimension by using a decision tree through the first mean value or the first variance and the second mean value or the second variance or through a difference between the first mean value and the second mean value, and build the risk model 400 corresponding to the user, wherein the length of the first time interval is greater than that of the second time interval.

Hereinafter, one specific example is illustrated as an example:
First, a user ID is taken as a primary key to acquire records of chatting between the user and sellers before transactions on all or specified platforms within one year, which include: durations of the communication between the user and the sellers, data sizes of records of the communication with the sellers, and interval times from completion of the communication with the sellers to initiation of payment.

Next, users whose network transaction services satisfy a certain condition (for example, the number of the network transaction services is greater than or equal to a preset number) in the past are selected. Then, for each of the selected users, the durations of the communication between the user and the sellers, the data sizes of records of the communication with the sellers, and the interval times from completion of the communication with the sellers to initiation of payment are aggregated respectively.

In this way, for each of the selected users, a mean value or variance of the durations of the communication between the user and the sellers, a mean value or variance of the data sizes of records of the communication with the sellers, and a mean value or variance of the interval times from completion of the communication with the sellers to initiation of payment can be obtained. That is, the historical behavior data of the communication between the user and the sellers before the initiation of the service interaction data (before the transaction payment) can be obtained.

Afterwards, new records of chatting with sellers within a duration (such as one month) before transaction are selected as a sample, to obtain, according to the above manner, a mean value or variance of durations of the communication with the sellers, a mean value or variance of data sizes of records of the communication with the sellers, and a mean value or variance of the interval times from completion of the communication with the sellers to initiation of payment of each of the selected users. That is, sample behavior data can be obtained. Of course, the sample behavior data can also be calculated before or at the same time as the historical behavior data is being calculated.

In this way, the risk model 400 may be built by means of a decision tree according to the above historical behavior data and the sample behavior data. Definitely, an absolute value of a deviation between the sample behavior data and corresponding data in the above historical behavior data may be calculated first, then the risk model 400 is built by means of the decision tree according to the absolute value. The risk model 400 may define a safety threshold range corresponding to each preset dimension (a duration of communication between the user and a seller, a data size of records of the communication with the seller, and an interval time from completion of the communication with the seller to initiation of payment).

Based on the above, in the present application, a risk model of service interaction data is built via a historical behavior of a user before initiation of the service interaction data, and safety of the current service interaction data is judged via the risk model, thereby reducing the degree of bothering the user and improving network communication efficiency.

Persons skilled in the art can clearly know that, for ease and clarity of descriptions, specific working processes of the apparatus, apparatus and modules described in the above may be obtained with reference to corresponding processes in the foregoing method embodiments, and are not repeated herein.

In the several embodiments provided in the present application, it should be understood that, the disclosed apparatus, apparatus and method may be implemented in other manners. For example, the apparatus embodiment described in the foregoing is merely schematic, for example, the division of modules is merely division of logic functions, and in fact, there may be other division manners during implementation, for example, multiple modules or components may be combined or may be integrated into another apparatus, or some features may be omitted or not be executed. On the other hand, the displayed or discussed coupling or direct coupling or communication connection between them may be indirect coupling or communication connection between apparatuses or modules through some interfaces, and may be in the form of electrical, mechanical or other forms.

Modules described as separated parts may be or may not be physically separated, parts displayed as units may be or may not be physical units, and they may be located at the same place, or be distributed to multiple network units. The objective of the solution of this embodiment may be implemented by selecting a part of or all modules thereof according to actual requirements.

In addition, each functional module of each embodiment of the present application may be integrated within a processing module, or these modules may be physically present in a separated manner, or two or more modules may also be integrated within a module. The integrated modules may be implemented in a form of hardware or in a form of hardware and software functional modules.

The integrated unit implemented in the form of software functional modules may be stored in a computer readable storage medium. The software function modules are stored in a storage medium, and include several instructions used to enable a computer device (which may be a personal computer, a server, a network device, and the like) or a processor to execute a part of steps of the method described in each embodiment of the present application. The storage medium includes: a USB flash disk, a mobile hard disk, a Read-Only Memory (ROM), a Random Access Memory (RAM), a magnetic disk, an optical disc, or other mediums that can store program codes.

Finally, it should be noted that, the above embodiments are merely used for describing the technical solution of the present application, instead of limiting the present application. Although the present application is described in detail with reference to the foregoing embodiments, those of ordinary skill in the art should understand that they can still make amendments to the technical solution recorded in the above embodiments, or perform equivalent replacements on a part of technical features thereof. These modifications or replacements are not intended to make the essences of the corresponding technical solutions depart from the spirit and scope of the technical solutions of all the embodiments of the present application.

## Claims

1. An interaction data processing method, comprising:
receiving service interaction data initiated by a user;
substituting user behavior data corresponding to the service interaction data in at least one preset dimension into a risk model corresponding to the user, wherein the preset dimension is associated with an interaction behavior between the user and a third party involved in the service interaction data; and
judging whether the user behavior data in the preset dimension is in a safety threshold range defined by the risk model; if yes, approving the service interaction data; and if no, rejecting the service interaction data.

2. The interaction data processing method of claim 1, further comprising building the risk model, which specifically comprises:
acquiring a value of a user historical behavior of the user corresponding to each piece of historical service interaction data in at least one preset dimension within a first time interval;
calculating a first mean value or a first variance of the user historical behaviors corresponding to all pieces of historical service interaction data in the preset dimension within the first time interval;
acquiring a value of the user historical behavior of the user corresponding to each piece of historical service interaction data in at least one preset dimension within a second time interval;
calculating a second mean value or a second variance of the user historical behaviors corresponding to all pieces of historical service interaction data in the preset dimension within the second time interval; and
calculating a safety threshold range corresponding to each preset dimension by using a decision tree through the first mean value or the first variance and the second mean value or the second variance or through a difference between the first mean value and the second mean value, and building the risk model corresponding to the user, wherein the length of the first time interval is greater than that of the second time interval.

3. The interaction data processing method of claim 1, wherein the substituting a value of a user behavior corresponding to the service interaction data in at least one preset dimension into a risk model specifically comprises:
judging whether the user behavior data corresponding to the service interaction data in the preset dimension exists; and
if yes, substituting the value of the user behavior corresponding to the service interaction data in at least one preset dimension into the risk model.

4. The interaction data processing method of any of claims 1 to 3, wherein the preset dimension is associated with an instant message interaction behavior between the user and the third party involved in the service interaction data.

5. The interaction data processing method of claim 4, wherein the preset user behavior comprises:
a communication duration of instant message interaction between the user and the third party involved in the service interaction data, a data size of the instant message interaction between the user and the third party involved in the service interaction data, and an interval time from completion of the instant message interaction between the user and the third party involved in the service interaction data to initiation of the service interaction data.

6. The interaction data processing method of claim 5, wherein the judging whether the user behavior data in the preset dimension is in a safety threshold range defined by the risk model specifically comprises:
judging whether the communication duration of the instant message interaction between the user and the third party involved in the service interaction data, the data size of the instant message interaction between the user and the third party involved in the service interaction data, and the interval time from completion of the instant message interaction between the user and the third party involved in the service interaction data to initiation of the service interaction data all fall within the corresponding safety threshold range.

7. An interaction data processing apparatus, comprising:
an interaction module configured to receive service interaction data initiated by a user;
a processing module configured to substitute user behavior data corresponding to the service interaction data in at least one preset dimension into a risk model corresponding to the user, wherein the preset dimension is associated with an interaction behavior between the user and a third party involved in the service interaction data; and
judge whether the user behavior data in the preset dimension is in a safety threshold range defined by the risk model; if yes, approve the service interaction data; and if no, reject the service interaction data.

8. The interaction data processing apparatus of claim 7, further comprising a model building module configured to:
acquire a value of a user historical behavior of the user corresponding to each piece of historical service interaction data in the at least one preset dimension within a first time interval;
calculate a first mean value or a first variance of the user historical behaviors corresponding to all pieces of historical service interaction data in the preset dimension within the first time interval;
acquire a value of the user historical behavior of the user corresponding to each piece of historical service interaction data in the at least one preset dimension within a second time interval;
calculate a second mean value or a first variance of the user historical behaviors corresponding to all pieces of historical service interaction data in the preset dimension within the second time interval;
calculate a safety threshold range corresponding to each preset dimension by using a decision tree through the first mean value or the first variance and the second mean value or the second variance or through a difference between the first mean value and the second mean value, and build the risk model corresponding to the user, wherein the length of the first time interval is greater than that of the second time interval.

9. The interaction data processing apparatus of claim 7, further comprising an adapter module configured to:
judge whether the user behavior data corresponding to the service interaction data in the preset dimension exists.

10. The interaction data processing apparatus of any of claims 7 to 9, wherein the preset dimension is associated with an instant message interaction behavior between the user and the third party involved in the service interaction data.

11. The interaction data processing apparatus of claim 10, wherein the preset user behavior comprises:
a communication duration of instant message interaction between the user and the third party involved in the service interaction data, a data size of the instant message interaction between the user and the third party involved in the service interaction data, and an interval time from completion of the instant message interaction between the user and the third party involved in the service interaction data to initiation of the service interaction data.

12. The interaction data processing apparatus of claim 11, wherein the processing module is specifically configured to:
judge whether the communication duration of the instant message interaction between the user and the third party involved in the service interaction data, the data size of the instant message interaction between the user and the third party involved in the service interaction data, and the interval time from completion of the instant message interaction between the user and the third party involved in the service interaction data to initiation of the service interaction data all fall within the corresponding safety threshold range.
